# EUROPEAN PATENT APPLICATION

(11) **EP 1 570 907 A2**
(43) Date of publication of application: **07.09.2005**
(21) Application number: 05004737.2
(22) Date of filing: 03.03.2005
(51) Int. Cl.: B05B 5/025

(54) **Electrostatic atomizer for a painting robot**

(30) Priority: 03.03.2004 JP 2004058550
(71) Applicant: Ransburg Industrial Finishing KK, Kanagawa-ken 236-0004 (JP)
(72) Inventor: Sakakibara, Masahito, Toyota-shi Aichi 471-8571 (JP); Saitou, Hideki, Toyota-shi Aichi 471-8571 (JP); Nagai, Kimiyoshi c/o Ransburg Ind. Finishing K.K., Yokohama-shi Kanagawa 236-0004 (JP)
(74) Representative: Zimmermann, Gerd Heinrich

(57) **Abstract**

An electrostatic atomizer (1) is attached to the distal end of an arm (17) of a painting robot to change the direction of paint sprayed from it, following to movements of a wrist portion (17a) of the arm (17). The electrostatic atomizer 1 includes a high voltage generator (4) that is supplied with electric power via a low voltage cable (16) extending through the arm (17). The low voltage cable (16) has an elastically shaped portion (16a) at least as a part thereof. The elastically shaped portion (16a) absorbs torsional or tensile force produced in the low voltage cable (16) under rotations of the wrist portion (17a) of the arm (17) and thereby prevents breakage of wires in the low voltage cable (16).

## Description

The present invention relates to an electrostatic atomizer to be attached to the distal end of an arm of a painting robot.

Painting or coating robots are widely used for coating vehicle bodies, for example. Coating robots have arms. Wrist portions of the arms are rotatable about a plurality of axes to change orientation of atomizers attached to distal ends of the wrists and to change the direction of sprays of coating materials from the atomizers. Therefore, coating robots have been used for coating surfaces having complicated topographies, such as inner surfaces of vehicle bodies.

Japanese Patent Laid-open Publication No. 8-164349 discloses a typical electrostatic atomizer for a painting robot. In electrostatic atomizers of this type, paint and compressed air are supplied to the atomizer through a pipe passing through the robot arm together with a power supply cable, through which the atomizer is electrically powered.

Existing electrostatic atomizers have built-in high-voltage generators. Therefore, low-voltage cables are used as power supply cables inside the robot arms. These low-voltage cables are connected to connectors of the high-voltage generators inside the atomizers to supply the high-voltage generators with a low-voltage power through the low-voltage cables.

As low voltage cables of electrostatic atomizers for painting robots, in general, twisted-and-paired cables are used, which are covered by an outer skin and have a shield line on the outer skin. The cables inside the outer skin are twisted together, and each cable comprises two wires twisted together.

As explained above, electrostatic atomizers for painting robots can change their orientations with rotating movements of wrist portions of the robot arms. Such movements of the wrist portions, however, often caused kinks of the low voltage cables and breakage of the wires in the low voltage cables. Furthermore, since existing electrostatic atomizers contained high-voltage generators inside and electric power was supplied through low-voltage cables inside the robot arms, torsions produced in the low-voltage cables by the rotations of the arm wrist portions often caused excessive tensile force or other kinds of force to the connectors of the high-voltage generators inside the electrostatic atomizers, and often invited breakage or disconnection of the connectors.

The above mentioned problems are solved by the electrostatic atomizer according to the claims 1, 11 and 12. Further details, improvements or aspects of the invention are disclosed in the description, the figures and the dependent claims.

It is therefore an object of the invention is to provide an electrostatic atomizer for a painting robot, which can prevent breakage of a power supply cable extending through a wrist portion of a robot arm even under rotations of the wrist portion.

A further object of the invention is to provide an electrostatic atomizer for a painting robot, which can prevent generation of torsions in the power supply cable inserted in the wrist portion of the robot arm even under rotations of the wrist portion.

According to the first aspect of the invention, there is provided an electrostatic atomizer to be attached to the distal end of an arm of a painting robot to change the direction of sprayed paint therefrom, following to movements of a wrist portion of the arm, comprising:
a power supply cable passing through the arm to convey power to the electrostatic atomizer, said power supply cable including an elastically shaped portion at least as a part thereof.

According to the first aspect of the invention, even when a torsional stress or a tensile force is produced in the power supply cable by rotations of the wrist portion of the robot arm, the elastically shaped portion of the power supply cable can absorb the torsional stress or the tensile force.

The elastically shaped portion may be formed undulant or helically curled, and it is preferably located inside the wrist portion of the robot arm. In case the elastically shaped portion is formed helically curled, pipes for air and paint can be placed in the hollow space defined by the elastically shaped portion to minimize undesirable influences of an increase of the cross-sectional area occupied by the elastically shaped portion inside the robot arm.

In the electrostatic atomizer according to the first aspect of the invention, a high voltage generator may be placed either inside the electrostatic atomizer like an existing electrostatic atomizer or outside the electrostatic atomizer. In the latter case, high voltage generated by the high voltage generator outside the electrostatic atomizer may be supplied to the electrostatic atomizer through a high voltage cable passing through the robot arm.

According to the second aspect of the invention, there is provided an electrostatic atomizer to be attached to the distal end of an arm of a painting robot to change the direction of sprayed paint therefrom, following to movements of a wrist portion of the arm, comprising:
a high voltage cable extending through the arm to convey to the electrostatic atomizer a high voltage generated by a high voltage generator held inside the arm of the painting robot.

According to the second aspect of the invention, the high voltage cable is located inside the robot arm to supply power to the electrostatic atomizer through the high voltage cable. Therefore, even when a torsional force is produced in the high voltage cable by rotations of the wrist portion of the robot arm, the high voltage cable having a sufficiently thick outer skin is strong against the torsional force, and its core cable having a relatively large diameter does not break.

The present invention further refers to an electrostatic atomizer attached to the distal end of an arm (17) of a painting robot to change the direction of paint sprayed from it, following to movements of a wrist portion (17a) of the arm (17). The electrostatic atomizer 1 preferably includes a high voltage generator (4) that is supplied with electric power via a low voltage cable (16) extending through the arm (17). The low voltage cable (16) preferably has an elastically shaped portion (16a) at least as a part thereof. The elastically shaped portion (16a) preferably absorbs torsional or tensile force produced in the low voltage cable (16) under rotations of the wrist portion (17a) of the arm (17) and thereby prevents breakage of wires in the low voltage cable (16).

The figures below refer to preferred embodiments of the invention:
Fig. 1 is a diagram showing an electrostatic atomizer according to the first embodiment of the invention, which is attached to a robot arm;
Fig. 2 is a diagram showing an electrostatic atomizer according to the second embodiment of the invention, which is attached to a robot arm; and
Fig. 3 is a cross-sectional view of a low voltage cable.

Some embodiments of the present invention are explained below with reference to the drawings.

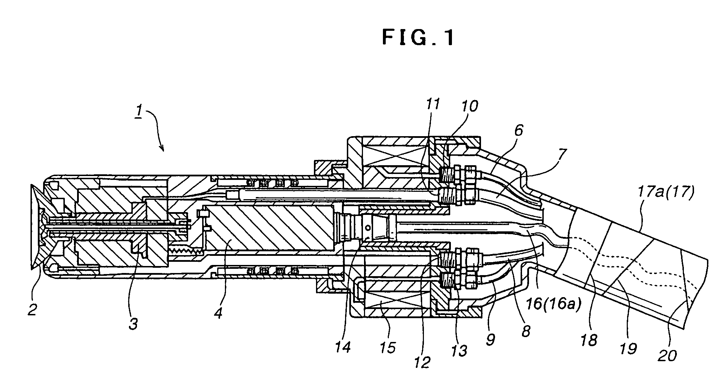

### First Embodiment (Fig. 1)

Fig. 1 shows an electrostatic atomizer 1 according to the first embodiment of the invention. The electrostatic atomizer 1 shown here is of a rotary atomization type. Like the conventional electrostatic atomizers, this atomizer 1 includes therein an air motor 3 for driving the rotary atomizer head 2 to rotate at a high speed, high voltage generator 4 of a cascade type, and valve mechanism 5. The rear end surface 1a of the electrostatic atomizer 1 has formed ports 10 through 13 to which air and paint pipes 6 through 9 are connected.

A connector 14 on the rear end surface of the high voltage generator 4 is fixed inside a sleeve 15, and the low voltage cable 16 is connected to the high voltage generator 4 via the connector 14. The low voltage cable 16, however, may be connected to the high voltage generator without the connector 14.

The electrostatic atomizer 1 is attached to the distal end of an arm 17 of a painting robot (not shown). Similarly to the conventional atomizers, the wrist portion 17a of the arm 17 is controlled for rotations about three independent axes on three planes 18, 19 and 20 (triaxial rotation control) to change the orientation of the electrostatic atomizer 1, that is, the direction of the spray of paint from the atomizer 1 as desired. Inside the arm 17, the pipes 6 through 9 and the low voltage cable 16 are inserted to extend axially.

The low voltage cable 16 includes an elastically shaped portion 16a at least in a part thereof. The elastically shaped portion 16a preferably extends at least over a length in alignment with the wrist portion 17a of the arm 17. The elastically shaped portion may be formed undulant or may be curled helically.

In the electrostatic atomizer 1 for a painting robot according to the first embodiment, the low voltage cable 16 passing inside and through the robot arm 17 includes the elastically shaped portion 16a. Therefore, when any torsional or tensile force is produced in the low voltage cable 16 during high-speed rotations of the wrist portion 17a of the robot arm 17, the elastically shaped portion 16a absorbs such force, and prevents conveyance of an undesirable excessive force to the connector 14. As a result, wires in the low voltage cable 16 are protected from breakage.

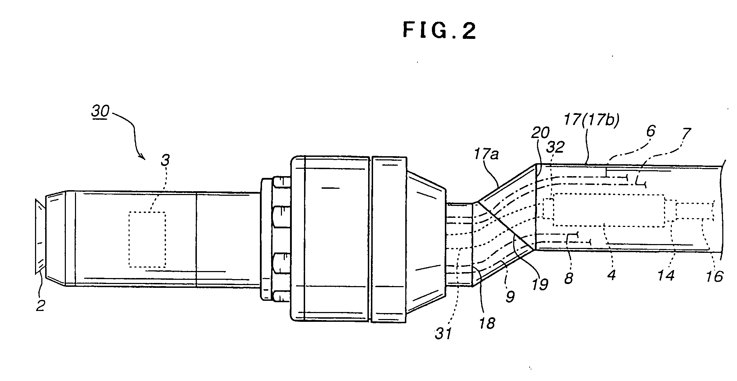

### Second Embodiment (Fig. 2)

Next explained is an electrostatic atomizer 30 for a painting robot according to the second embodiment of the invention with reference to Fig. 2. In Fig. 2, identical or equivalent parts and components to those of the atomizer 1 according to the first embodiment are labeled with common reference numerals, and their explanation is omitted in the following description. Therefore, the following explanation of the second embodiment is limited to the features different from the first embodiment.

Unlike the first embodiment locating the high voltage generator 4 inside the atomizer, the electrostatic atomizer 30 according to the second embodiment locates the high voltage generator 4 inside the arm main body 17b of the robot arm 17. Thus, the electrostatic atomizer 30 according to the second embodiment is supplied with high voltage generated in the high voltage generator 4 via a high voltage cable 31. Reference numeral 32 denotes a connector.

The high voltage cable 31 used here is an existing high voltage cable comprising one or more core wires and a thick outer skin (approximately 3~6 mm thick) enveloping the core wires. Alternatively, however, the high voltage cable 31 extending inside the robot arm 17 may include an elastically shaped portion 16a explained with reference to the first embodiment, which preferably extends at least over a length in alignment with the wrist portion 17a of the robot arm.

In the electrostatic atomizer 30 for a painting robot according to the second embodiment, the high voltage generator 4 is located on the part of the robot arm 17 such that the high voltage is supplied to the atomizer 30 via the high voltage cable 31. Additionally, the high voltage cable 31 has the thick outer skin that is so much strong against torsions, and the core wires have relatively large diameters. Therefore, even if a torsional stress is produced in the high voltage cable 31, breakage of wires seldom occurs.

The first and second embodiments have been explained as applying the invention to rotary atomization type electrostatic atomizers 1 and 30 having rotary atomizer heads 2. However, the invention is applicable to spray-type electrostatic atomizers as well.

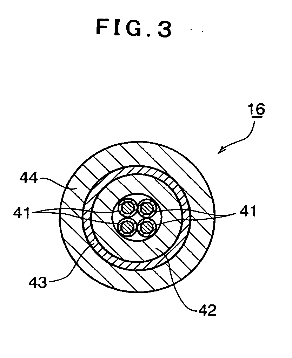

The first embodiment has been explained as using a cable including an elastically shaped portion 16a as the low voltage cable 16. However, instead of it, or in addition to it, the low voltage cable 16 may have an additional outer skin 44 that covers the outer skin 42 enveloping the shield line 43 as shown in Fig. 3. The additional outer skin 44 is preferably made of a plastic material excellent in slidableness, wear resistance and flexibility, such as fluorine-based resins, nylon-based resins or polyolefin-based resins. Such modification is possible in the second embodiment as well.

The additional outer skin 44 may be made of a translucent or transparent plastic material such that operators can visually find deviation of the shield line 43 covered by the additional outer skin 44 or darkening thereof by abrasion. In this case, easier maintenance against breakage of inner wires 41 is expected.

The first embodiment has been explained as using a twisted-and-paired cable with twisted inner wires as the low voltage cable 16. Instead, however, a cable with straight inner wires extending in parallel (not twisted) may be used. In this case, the outer skin of the inner wires is preferably made of a plastic material excellent in slidableness, wear resistance and flexibility, such as fluorine-based resins, nylon-based resins or polyolefin-based resins.

In case a helical configuration is employed as the elastically shaped portion 16a of the low voltage cable 16 or the high voltage cable 31 in the first and second embodiments, one or more of the pipes 6~9 may be located inside the hollow space defined by the helical portion 16a. In this case, although the helical portion 16a occupies a larger cross-sectional area than that of a low voltage cable or a high voltage cable without the helical portion 16a, the increase of the cross-sectional area occupied by the low voltage cable 16, i.e. the decrease of the remainder cross-sectional area in the robot arm for accommodating the pipes 6~9, can be alleviated so much as the number of the pipes 6~9 placed inside the helical portion 16a.

The first and second embodiments have been explained as connecting the low voltage cable 16 to the high voltage generator 4 via the connector 14. Instead, however, the low voltage cable 16 may be connected to the high voltage generator 4 directly without using the connector 14. Similarly, the high voltage cable 31 may be connected to the high voltage generator 4 directly without using the connector 32.

## Claims

1. An electrostatic atomizer (1; 30) to be attached to the distal end of an arm (17) of a painting robot to change the direction of sprayed paint therefrom, following to movements of a wrist portion (17a) of the arm (17), comprising:
a power supply cable (16) passing through the arm (17) to convey power to the electrostatic atomizer (1; 30), said power supply cable (16) including an elastically shaped portion (16a) at least as a part thereof.

2. The electrostatic atomizer according to claim 1 wherein the elastically shaped portion of the power supply cable (16) is formed undulant.

3. The electrostatic atomizer according to claim 1 or 2, wherein the elastically shaped portion (16a) of the power supply cable (16) is helically curled.

4. The electrostatic atomizer according to claim 3 further comprising a plurality of pipes (6; 7; 8; 9) for air and/or paint, which are inserted in the arm (17) and connected to a rear end surface of the electrostatic atomizer (1; 30),
wherein at least one of the pipes (6; 7; 8; 9) is placed in the space defined by the helically curled portion of the power supply cable (16).

5. The electrostatic atomizer according to any one of the preceding claims wherein the power supply cable (16) includes a plurality of wires (41) enveloped together by an outer skin (42), a shield line (43) provided on the outer skin (42), and an additional outer skin (44) covering the shield line (43).

6. The electrostatic atomizer according to claim 5, wherein the additional outer skin (44) is made of a material selected from the groups consisting of fluorine-based resins, nylon-based resins and polyolefin-based resins.

7. The electrostatic atomizer according to claim 5 or 6 wherein the additional outer skin (44) is transparent or translucent.

8. The electrostatic atomizer according to any one of the preceding claims, wherein the power supply cable (16) includes a plurality of inner wires (41) extending straight without being twisted, and the outer skin (42) of the inner wires (41) is made of a slidable material.

9. The electrostatic atomizer according to any one of the preceding claims wherein a high voltage generator (4) is provided inside the electrostatic atomizer (1; 30) and supplied with power via a low voltage cable (16) extending inside the arm (17).

10. The electrostatic atomizer according to any one of the preceding claims wherein a high voltage generator (4) is provided inside the arm (17) and supplies a high voltage to the electrostatic atomizer (1; 30) via a high voltage cable (31) extending inside the arm (17).

11. An electrostatic atomizer (1; 30) to be attached to the distal end of an arm (17) of a painting robot to change the direction of sprayed paint therefrom, following to movements of a wrist portion (17a) of the arm (17), comprising:
comprising a high voltage cable (31) extending through the arm (17) to convey to the electrostatic atomizer (1; 30) a high voltage generated by a high voltage generator (4) held inside the arm (17) of the painting robot.

12. An electrostatic atomizer (1; 30) to be attached to the distal end of an arm (17) of a painting robot to change the direction of sprayed paint therefrom, following to movements of a wrist portion (17a) of the arm (17), comprising:
a high voltage generator (4) held inside the electrostatic atomizer (1;30); and
a low voltage cable (16) extending through the arm (17) to be connected to the high voltage generator (4),
wherein the low voltage cable (16) has an additional outer skin (42) enveloping a shield line thereof.

13. The electrostatic atomizer (1; 30) according to claim 12 wherein the additional outer skin (44) is made of a material selected from the group consisting of fluorine-based resins, nylon-based resins and polyolefin-based resins.

14. The electrostatic atomizer according to claim 12 or 13 wherein the low voltage cable (16) includes a plurality of inner wires (41) that extend straight in parallel to each other.

15. The electrostatic atomizer (1; 30) according to claim 14 wherein an outer skin (42) of the inner wires (41) is made of a material selected from the group consisting of fluorine-based resins, nylon-based resins and polyolefin-based resins.
